# EUROPEAN PATENT APPLICATION

(11) **EP 4 749 470 A1**
(43) Date of publication of application: **27.05.2026**
(21) Application number: 24850485.4
(22) Date of filing: 11.03.2024
(51) Int. Cl.: G06F 15/163

(54) **INFORMATION SYNCHRONIZATION METHOD AND APPARATUS**

(30) Priority: 07.08.2023 CN 202310993534
(71) Applicant: HUAWEI TECHNOLOGIES CO., LTD., Shenzhen 518129 (CN)
(72) Inventor: LI, Guozhu, Shenzhen, Guangdong 518129 (CN); OBERHAUSER, Jonas, Shenzhen, Guangdong 518129 (CN)
(74) Representative: Maiwald GmbH
(86) International application number: PCT/CN2024/080987
(87) International publication number: WO 2025/030825

(57) **Abstract**

This application provides an information synchronization method and apparatus, and relates to the field of computer technologies, to improve information synchronization efficiency. The information synchronization method includes: A queue manager receives a first request from a first processing unit, where the first request includes a first address and first data, the first request indicates to write the first data to a first queue corresponding to the first address, the first address is a storage address of the first data in a memory, and the memory stores data in a queue group. If the queue group includes the first queue, the queue manager writes the first data to the first queue in response to the first request. The queue manager receives a second request from a second processing unit, and sends target data to a bus, where the second request includes the first address, and the second request indicates to read the target data from the first queue.

## Description

This application claims priority to Chinese Patent Application No. 202310993534.8, filed with the China National Intellectual Property Administration on August 7, 2023 and entitled "INFORMATION SYNCHRONIZATION METHOD AND APPARATUS", which is incorporated herein by reference in its entirety.

### TECHNICAL FIELD

This application relates to the field of computer technologies, and in particular, to an information synchronization method and apparatus.

### BACKGROUND

For a central processing unit (central processing unit, CPU) that includes a plurality of threads or a plurality of cores, synchronization is required between the threads or the cores. Synchronization may include state information synchronization and data information synchronization. For example, a plurality of cores cooperate to complete a large task, and some steps need to be completed first before other steps can be performed. This performing sequence is referred to as state information synchronization. Alternatively, an operation result of a core needs to be shared with another core, and this synchronization is referred to as data information synchronization. Synchronization is also required between different computing units (for example, a CPU, a GPU graphics processing unit (graphics processing unit, GPU), and a tensor processing unit (tensor processing unit, TPU)). Therefore, an information synchronization method is required to implement information synchronization between different objects.

In the conventional technology, information synchronization between different computing units is implemented by memory sharing. Specifically, a plurality of computing units (including a computing unit A) need to repeatedly access a same address in a memory to learn of a global state. The address is used to store a value representing the global state. Once the value in the address changes to a value representing a free state, the computing unit A atomically writes, to the address, a value representing an occupied state, to obtain execution permission. Only one computing unit can obtain the execution permission at a same time, to implement state information synchronization. Atomically writing means that in one write operation, all data is written or no data is written. After the computing unit A obtains the execution permission, the computing unit A performs a corresponding read/write operation. When data in the memory is updated, a public cache of the plurality of computing units synchronizes the data in the memory by using a synchronization protocol and a bus. For example, the protocol may be a modify-exclusive-shared-invalid (MESI) synchronization protocol. In this way, a computing unit other than the computing unit A learns of a change in the data in the memory, to implement data information synchronization between different computing units. During actual application, in a case in which state information is synchronized, data information synchronization may not be required.

However, in the case in which state information is synchronized, data information synchronization may not be required, and implementing data information synchronization by using the synchronization protocol and the bus generates a large amount of invalid data on the bus and reduces synchronization efficiency.

### SUMMARY

This application provides an information synchronization method and apparatus, and relates to the field of computer technologies, to improve information synchronization efficiency.

To achieve the foregoing objective, this application uses the following technical solutions.

According to a first aspect, an information synchronization method is provided, applied to an electronic device. The electronic device includes a queue manager, a bus, a plurality of processing units, and a memory, the queue manager communicates with the processing units through the bus, the queue manager includes a queue group, the queue group includes a plurality of queues, and the plurality of processing units include a first processing unit and a second processing unit. The method includes: The queue manager receives a first request from the first processing unit, where the first request includes a first address and first data, the first request indicates to write the first data to a first queue corresponding to the first address, the first address is a storage address of the first data in the memory, and the memory stores data in the queue group. If the queue group includes the first queue, the queue manager writes the first data to the first queue in response to the first request. The queue manager receives a second request from the second processing unit, and sends target data to the bus, where the second request includes the first address, and the second request indicates to read the target data from the first queue.

In the technical solution provided in this application, the second processing unit can read the target data from the first queue by using the second request only after the first processing unit writes, by using the first request, the first data to the first queue corresponding to the first address, and information synchronization between different objects is implemented by using the queue. In addition, the first queue sends the target data to the bus only after receiving the second request for reading the target data. In this process, no large amount of invalid data is generated on the bus. Compared with memory sharing in which as long as there is new data, the new data is shared to another computing unit by using a bus and a synchronization protocol, this process improves synchronization efficiency.

In a possible implementation of the first aspect, if the queue group does not include the first queue, the queue manager determines an idle queue in the queue group; and the queue manager determines the idle queue as the first queue corresponding to the first address. The foregoing possible implementation ensures uniqueness of the first queue.

In a possible implementation of the first aspect, that the queue manager determines the idle queue as the first queue corresponding to the first address includes: The queue manager uses the first address as index information of the idle queue, to determine the idle queue as the first queue. The foregoing possible implementation ensures uniqueness of the first queue.

In a possible implementation of the first aspect, that the queue manager determines the idle queue in the queue group includes: If the queue group does not include the first queue and there is no idle queue in the queue group, the queue manager writes second data in a second queue in the queue group to a second address in the memory, where the second address is a storage address of the second data in the memory; the queue manager initializes the second queue, to determine the second queue as the idle queue; and the queue manager writes the data in the second address to the idle queue. The foregoing possible implementation increases a capacity of a queue.

In a possible implementation of the first aspect, writing the first data to the first queue includes: The queue manager writes the first data to a storage area indicated by a first data pointer, where the first data pointer is a data pointer corresponding to the storage area that stores the first data in the first queue; and writes the first data pointer to the first queue.

In a possible implementation of the first aspect, the queue manager deletes the first data pointer and the first data based on a location of the first data pointer in the first queue and identification information of the first data pointer. The foregoing possible implementation improves utilization of the first queue.

In a possible implementation of the first aspect, the memory includes a main memory or a cache. The foregoing possible implementation improves diversity of selection.

According to a second aspect, an information synchronization method is provided, applied to an electronic device. The electronic device includes a queue manager, a bus, a plurality of processing units, and a memory, the queue manager communicates with the processing units through the bus, and the plurality of processing units include a first processing unit and a second processing unit. The method includes: The queue manager receives a first request from the first processing unit, where the first request includes a first address and first data, the first request indicates to write the first data to the first address, the first address is a storage address of the first data in the memory, and the memory stores data. In response to the first request, the queue manager writes the first data to the first address according to a queuing sequence, where the queuing sequence is determined by the queue manager based on a data state in the first address and a capacity of the first address. The queue manager receives a second request from the second processing unit, and sends target data to the bus, where the second request includes the first address, and the second request indicates to read the target data from the first address.

According to a third aspect, an information synchronization apparatus is provided. The apparatus is used in an electronic device, the electronic device further includes a bus, a plurality of processing units, and a memory, the apparatus communicates with the processing units through the bus, the apparatus includes a queue group, the queue group includes a plurality of queues, and the plurality of processing units include a first processing unit and a second processing unit. The apparatus further includes: a receiving unit, configured to receive a first request from the first processing unit, where the first request includes a first address and first data, the first request indicates to write the first data to a first queue corresponding to the first address, the first address is a storage address of the first data in the memory, and the memory stores data in the queue group; an execution unit, configured to: when the queue group includes the first queue, write the first data to the first queue in response to the first request, where the receiving unit is further configured to receive a second request from the second processing unit, where the second request includes the first address, and the second request indicates to read target data from the first queue; and a sending unit, configured to send the target data to the bus.

In a possible implementation of the third aspect, the apparatus further includes a determining unit, and the determining unit is configured to: when the queue group does not include the first queue, determine an idle queue in the queue group; and determine the idle queue as the first queue corresponding to the first address.

In a possible implementation of the third aspect, the determining unit is further configured to use the first address as index information of the idle queue, to determine the idle queue as the first queue.

In a possible implementation of the third aspect, the determining unit is further configured to: when the queue group does not include the first queue and there is no idle queue in the queue group, write second data in a second queue in the queue group to a second address in the memory, where the second address is a storage address of the second data in the memory; initialize the second queue, to determine the second queue as the idle queue; and write the data in the second address to the idle queue.

In a possible implementation of the third aspect, the execution unit is further configured to: write the first data to a storage area indicated by a first data pointer, where the first data pointer is a data pointer corresponding to the storage area that stores the first data in the first queue; and write the first data pointer to the first queue.

In a possible implementation of the third aspect, the apparatus further includes a deletion unit, and the deletion unit is configured to delete the first data pointer and the first data based on a location of the first data pointer in the first queue and identification information of the first data pointer.

In a possible implementation of the third aspect, the memory includes a main memory or a cache.

According to a fourth aspect, an information synchronization apparatus is provided. The information synchronization apparatus includes a processor and a memory, the memory is configured to store instructions, and the processor is configured to perform the information synchronization method according to any one of the first aspect, the possible implementation of the first aspect, or the second aspect.

According to another aspect of this application, a computer-readable storage medium is provided. The computer-readable storage medium includes a computer request. When the computer request is run on an information synchronization apparatus, the information synchronization apparatus is enabled to perform the information synchronization method according to any one of the first aspect, the possible implementation of the first aspect, or the second aspect.

According to another aspect of this application, a computer program product including a request is provided. When the computer program product runs on a computer device, the computer device is enabled to perform the information synchronization method according to any one of the first aspect, the possible implementation of the first aspect, or the second aspect.

It may be understood that the information synchronization apparatus, the computer-readable storage medium, and the computer program product provided above may be configured to perform the corresponding method provided above. Therefore, for beneficial effects that can be achieved by the information synchronization apparatus, the computer-readable storage medium, and the computer program product, refer to beneficial effects in the corresponding method provided above. Details are not described herein again.

### BRIEF DESCRIPTION OF DRAWINGS

FIG. 1 is a diagram of state information synchronization;
FIG. 2 is a diagram of memory sharing;
FIG. 3 is another diagram of memory sharing;
FIG. 4 is a diagram of a hardware queue;
FIG. 5 is a diagram of a structure of an electronic device according to an embodiment of this application;
FIG. 6 is a schematic flowchart of an information synchronization method according to an embodiment of this application;
FIG. 7 is a schematic flowchart of another information synchronization method according to an embodiment of this application;
FIG. 8 is a schematic flowchart of determining a first queue according to an embodiment of this application;
FIG. 9 is a diagram of an information synchronization method according to an embodiment of this application;
FIG. 10 is a diagram of a structure of an information synchronization apparatus according to an embodiment of this application; and
FIG. 11 is a diagram of a structure of another information synchronization apparatus according to an embodiment of this application.

### DESCRIPTION OF EMBODIMENTS

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural. In addition, terms such as "first" and "second" are used in embodiments of this application to distinguish between same items or similar items that provide basically same functions and purposes. For example, a first threshold and a second threshold are merely used for distinguishing between different thresholds, and a sequence thereof is not limited. A person skilled in the art may understand that the terms such as "first" and "second" do not limit a quantity and an execution sequence.

Optionally, in this application, a word "example" or "for example" represents giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

For ease of understanding, before embodiments of this application are described, related knowledge of memory semantics provided in embodiments of this application is first described.

Generally, computing units of a computer may share a same memory, for example, a dynamic random access memory (dynamic random access memory, DRAM). Generally, such a memory is referred to as a main memory, or may be referred to as a physical memory. Because a speed of accessing the main memory by a computing unit is slow, to improve access efficiency, a cache (Cache) is provided inside the computing unit. The cache is used to temporarily store a part of data from the main memory, and the part of data is data frequently accessed by the computing unit. In the following, the main memory and the cache are collectively referred to as a memory. That is, the memory includes the main memory and the cache. The computing unit may be a related processor such as a central processing unit (central processing unit, CPU), a GPU graphics processing unit (graphics processing unit, GPU), or a tensor processing unit (tensor processing unit, TPU).

When reading data, the computing unit first searches the cache for the to-be-read data, and if the cache stores the to-be-read data, reads the data immediately (read acceleration). If the cache does not store the to-be-read data, the computing unit reads the data from the main memory, and stores a data block in which the data is located in the cache, so that the entire data block can be directly read from the cache in a next read. When writing data, the computing unit first writes the data to the cache (write acceleration). If there is no remaining storage space in the cache, the computing unit updates old data in the cache to the main memory, and then writes the data to the cache.

Because of existence of the cache, when accessing the main memory by using a request, the computing unit does not directly access the main memory, but first accesses the cache. If the cache cannot meet an access requirement, the computing unit accesses the main memory. For example, when reading data by using a read request, the computing unit first accesses the cache, and accesses the main memory if the cache does not store the to-be-read data. In this specification, a request that combines behaviors of cache access and main memory access is referred to as memory semantics.

A cache coherence (cache coherent, CC) protocol is maintained between the computing unit and the main memory. The CC protocol may enable each computing unit to semantically consider that the foregoing access does not go through the cache. That is, the CC protocol may enable each computing unit to semantically consider that the foregoing access is perceived as if the access does not go through the cache. However, the CC protocol is effective only for the current computing unit, and may not be effective for a plurality of computing units. Therefore, memory semantics also includes a memory barrier (memory barrier, MB).

The MB is a synchronization point, to force all computing units to perceive that all operations before the point are effective for all computing units, or enable all operations before the point to be performed before an operation after the point is performed. The MB is also referred to as a memory fence, a barrier request, or the like.

Before embodiments of this application are described, information synchronization between different objects is first described.

For a CPU that includes a plurality of threads or a plurality of cores, synchronization is required between the threads or the cores. Synchronization may include state information synchronization and data information synchronization. For example, a plurality of cores cooperate to complete a large task, and some steps need to be completed first before other steps can be performed. This performing sequence is referred to as state information synchronization. Alternatively, an operation result of a core needs to be shared with another core, and this synchronization is referred to as data information synchronization. Synchronization is also required between different computing units (for example, a CPU, a GPU, and a TPU).

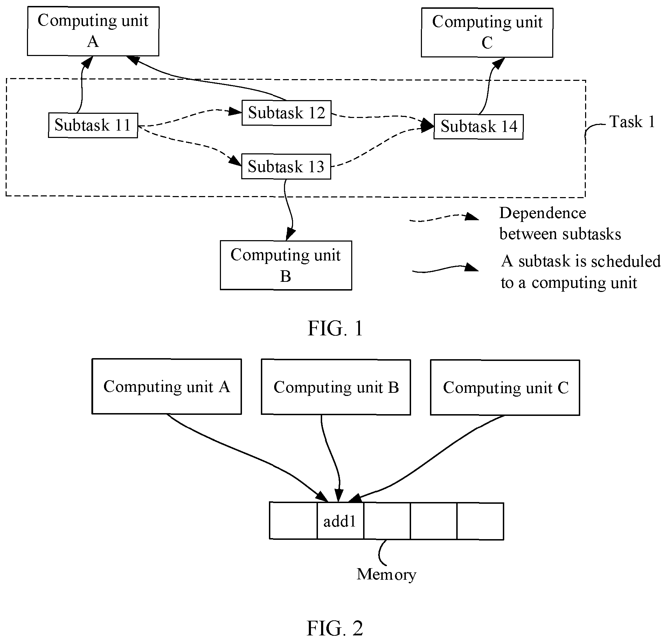

For example, FIG. 1 is a diagram of state information synchronization. As shown in FIG. 1, a computing unit A, a computing unit B, and a computing unit C cooperate to complete a task 1. The task 1 includes a subtask 11, a subtask 12, a subtask 13, and a subtask 14. The subtask 11 and the subtask 12 are scheduled to the computing unit A (that is, the computing unit A completes the subtask 11 and the subtask 12), the subtask 13 is scheduled to the computing unit B (that is, the computing unit B completes the subtask 13), and the subtask 14 is scheduled to the computing unit C (that is, the computing unit C completes the subtask 14). A dependency relationship exists between different subtasks. For example, the subtask 12 and the subtask 13 can be executed only after the task 11 is completed, and the subtask 14 can be executed only when the subtask 12 and the subtask 13 are completed at the same time. Therefore, in a process of completing the task 1, different working states of the computing unit A, the computing unit B, and the computing unit C are follows:

In a process in which the computing unit A completes the subtask 11, the computing unit B and the computing unit C are in a waiting state. In a process in which the computing unit A completes the subtask 12 and the computing unit B executes the subtask 13, the computing unit C is in a waiting state. In a process in which the computing unit C completes the subtask 14, the computing unit A and the computing unit B are in a waiting state.

Therefore, an information synchronization method is required to implement information synchronization between different objects. Currently, the following two solutions are used to implement information synchronization between different objects:

Solution 1: Information synchronization between different computing units is implemented by memory sharing.

Specifically, a plurality of computing units (including a computing unit A) need to repeatedly access a same address in a memory to learn of a global state. The address is used to store a value representing the global state. Once the value in the address changes to a value representing a free state, the computing unit A atomically writes, to the address, a value representing an occupied state. The computing unit may be any one of the plurality of computing units. The computing unit obtains execution permission, to implement state information synchronization. Atomically writing means that in one write operation, all data is written or no data is written. After the computing unit A obtains the execution permission, the computing unit A performs a corresponding read/write operation. When data in the memory is updated, a public cache of the plurality of computing units synchronizes the data in the memory by using a synchronization protocol and a bus. For example, the protocol may be a modify-exclusive-shared-invalid (MESI) synchronization protocol. In this way, a computing unit other than the computing unit A learns of a change in the data in the memory, to implement data information synchronization between different computing units. During actual application, in a case in which state information is synchronized, data information synchronization may not be required.

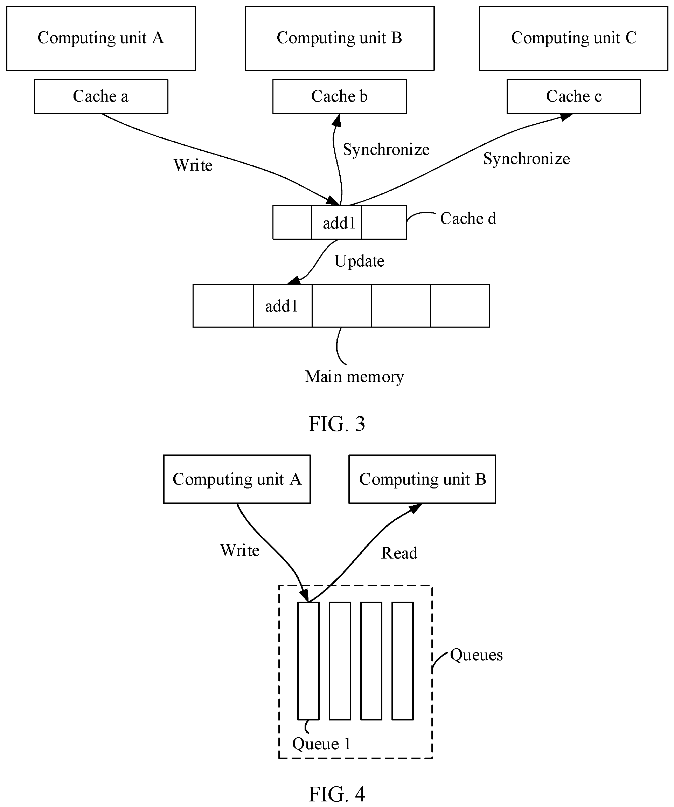

For example, FIG. 2 is a diagram of memory sharing. As shown in FIG. 2, a computing unit A, a computing unit B, and a computing unit C jointly access a same address add1 in a memory. The address add1 is used to store a value representing a state of the memory. The memory may be a shared cache of the computing unit A, the computing unit B, and the computing unit C. As shown in FIG. 3, the computing unit A has a corresponding cache a (which may also be referred to as a local cache of the computing unit A), the computing unit B has a corresponding cache b (which may also be referred to as a local cache of the computing unit B), and the computing unit C has a corresponding cache c (which may also be referred to as a local cache of the computing unit C). A cache d and a main memory are a public cache and a public main memory, respectively. That is, the computing unit A, the computing unit B, and the computing unit C all can access the cache d and the main memory, and the main memory may also be referred to as a physical memory.

If the computing unit A atomically writes a value representing an occupied state to the address add1 in the cache d, that is, the computing unit A obtains execution permission of the memory, the cache d synchronizes the value representing the occupied state to the cache b and the cache c by using a bus and a synchronization protocol, and the computing unit B and the computing unit C learn that data in the address add1 is changed. This implements data information synchronization between the computing unit A, the computing unit B, and the computing unit C. When the computing unit A writes new data to the cache d, and there is no remaining storage space in the cache d, the cache d first updates old data to the main memory, and then the computing unit A writes the new data to the cache d. The bus is not shown in FIG. 3.

However, in a case in which state information is synchronized, data information synchronization may not be required, and implementing data information synchronization by using the synchronization protocol and the bus generates a large amount of invalid data on the bus and reduces synchronization efficiency.

Solution 2: Information synchronization between different computing units is implemented by using a queue.

Specifically, a queue is allocated to different computing units, and the queue is used to sort, according to a sending sequence, data sent by corresponding computing units. When a computing unit reads data from the queue, the queue forwards the data according to a first-in first-out principle.

For example, as shown in FIG. 4, the queue includes a queue 1, and the queue 1 is allocated to a computing unit A and a computing unit B. The computing unit A sends a write request to the queue 1 through a bus, and the write request includes identification information of the queue 1 and data. The queue 1 sorts the data according to a sequence of receiving the write request, and the data is written to the queue 1. The computing unit B sends a read request to the queue 1 through the bus, and the read request indicates to read data in the queue 1. After receiving the read request from the computing unit B, the queue 1 forwards the data to the computing unit B according to the first-in first-out principle. That is, the computing unit B reads the data from the queue 1 after the computing unit A writes the data to the queue 1. This implements information synchronization between the computing units. The bus is not shown in FIG. 4.

However, in this solution, a quantity of queues is limited, and it is difficult to meet a requirement of general computing.

Based on this, this application provides an information synchronization method, to improve information synchronization efficiency. The method is applied to an electronic device. The electronic device includes a queue manager, a bus, a plurality of processing units, and a memory, the queue manager communicates with the processing units through the bus, the queue manager includes a queue group, the queue group includes a plurality of queues, and the plurality of processing units include a first processing unit and a second processing unit. The method includes: The queue manager receives a first request from the first processing unit, where the first request includes a first address and first data, the first request indicates to write the first data to a first queue corresponding to the first address, the first address is a storage address of the first data in the memory, and the memory stores data in the queue group. If the queue group includes the first queue, the queue manager writes the first data to the first queue in response to the first request. The queue manager receives a second request from the second processing unit, and sends target data to the bus, where the second request includes the first address, and the second request indicates to read the target data from the first queue.

In this process, the second processing unit can read the target data from the first queue by using the second request only after the first processing unit writes, by using the first request, the first data to the first queue corresponding to the first address, and information synchronization between different objects is implemented by using the queue. In addition, the first queue sends the target data to the bus only after receiving the second request for reading the target data. In this process, no large amount of invalid data is generated on the bus. Compared with memory sharing in which as long as there is new data, the new data is shared to another computing unit by using a bus and a synchronization protocol, this process improves synchronization efficiency.

Optionally, the code processing method provided in the embodiments may be applied to the electronic device. The electronic device may include a terminal device. The terminal device may include but is not limited to a personal computer, a server computer, a mobile device (such as a mobile phone, a tablet computer, or a media player), a wearable device, a vehicle-mounted device, a consumer terminal device, a mobile robot, an uncrewed aerial vehicle, and the like.

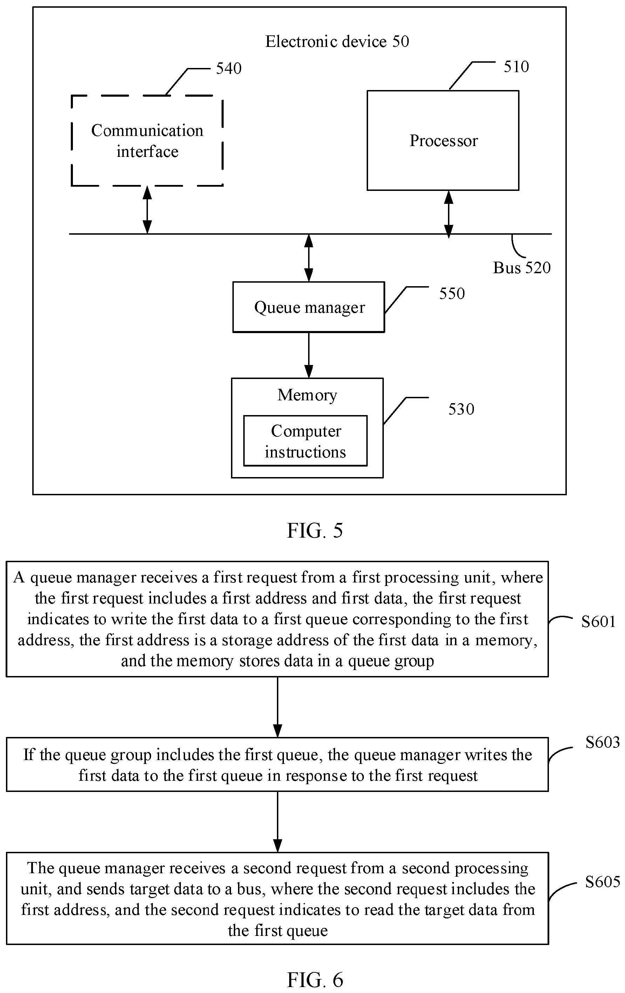

The following describes a structure of the electronic device with reference to FIG. 5. For example, FIG. 5 is a diagram of a structure of an electronic device according to an embodiment of this application. The electronic device 50 may include a processor 510, a bus 520, a memory 530, a communication interface 540, and a queue manager 550. The processor 510, the memory 530, the communication interface 540, and the queue manager 550 are connected through the bus 520.

It should be understood that, in this embodiment, the processor 510 may be a CPU, or the processor 510 may be another general-purpose processor, a digital signal processor (digital signal processor, DSP), an application-specific integrated circuit (ASIC), a field-programmable gate array (field-programmable gate array, FPGA) or another programmable logic device, a discrete gate or transistor logic device, a discrete hardware component, or the like. The general-purpose processor may be a microprocessor, any conventional processor, or the like.

Alternatively, the processor 510 may be a graphics processing unit (graphics processing unit, GPU), a neural network processing unit (neural network processing unit, NPU), a microprocessor, an ASIC, or one or more integrated circuits configured to control program execution in the solutions of this application. In embodiments of this application, the processor may also be referred to as a computing unit.

In embodiments of this application, the processor 510 may be configured to send a request to the queue manager 550. For example, the processor 510 may be configured to send a first request to the queue manager 550, where the first request may indicate to write first data to a first queue corresponding to a first address. The processor 510 may be configured to send a second request to the queue manager 550, where the second request may indicate to read target data from the first queue corresponding to the first address. The first request and the second request may be sent by different processors. The processor may also be referred to as a processing unit, and the processor may also be referred to as a computing unit.

The communication interface 540 is configured to implement communication between the electronic device 50 and an external device or a component.

The bus 520 may include a path for transmitting information between the foregoing components (for example, the processor 510 and the memory 530). In addition to a data bus, the bus 520 may further include a power bus, a control bus, a status signal bus, and the like. However, for clear description, various types of buses in the figure are marked as the bus 520. The bus 520 may be a peripheral component interconnect express (peripheral component interconnect express, PCIe) bus, an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), or the like. The bus 520 may be classified into an address bus, a data bus, a control bus, or the like.

In an example, the electronic device 50 may include a plurality of processors. The processor may be a multi-core (multi-CPU) processor. The processor herein may be one or more devices, circuits, and/or computing units configured to process data (for example, a computer program request).

It should be noted that, in FIG. 5, only an example in which the electronic device 50 includes one processor 510 and one memory 530 is used. Herein, the processor 510 and the memory 530 separately indicate a type of component or device. In a specific embodiment, a quantity of each type of components or devices may be determined based on a service requirement.

The memory 530 may be a volatile memory pool or a non-volatile memory pool, or may include both volatile and non-volatile memories. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In this embodiment of this application, the foregoing memories may be referred to as a main memory, or may be referred to as a physical memory. The memory 530 may further include a cache (cache), and the cache is configured to store a part of data from the main memory.

The queue manager 550 may be configured to receive information, send information, store target data, and manage a queue. For example, the queue manager 550 may be configured to receive a request from the processor 510 through the bus 520, where the request may include the first request and the second request. The queue manager 550 may be configured to send the target data to the processor 510 through the bus 520. The queue manager 550 may include a plurality of queues, and each of the plurality of queues may be used to store the target data. The queue manager 550 may be configured to manage a queue. The queue manager 550 may also be referred to as a queuing agent.

The following describes an information synchronization method provided in embodiments of this application with reference to the electronic device shown in FIG. 5. All steps in the information synchronization method provided in embodiments of this application are performed by the queue manager in FIG. 5.

FIG. 6 is a schematic flowchart of an information synchronization method according to an embodiment of this application. The method includes the following steps.

S601: A queue manager receives a first request from a first processing unit, where the first request includes a first address and first data, the first request indicates to write the first data to a first queue corresponding to the first address, the first address is a storage address of the first data in a memory, and the memory stores data in a queue group.

The first processing unit may include a thread, a core, a CPU, or any processor that participates in computing or communication. The processor may be the processor described in FIG. 5. The first processing unit may also be referred to as a first computing unit. In addition, the first request may also be referred to as a write request, and the first request may be implemented by using an instruction. For example, the instruction may include a gqm_push instruction.

In addition, the memory may be the memory described in FIG. 5. The memory may store data. For example, the memory may store data in the queue group. For example, data in any queue in the queue group may be updated to the memory. Optionally, the memory may be a main memory or a cache.

In a first possible implementation, the memory may be a main memory, and the first address is a storage address of target data in the main memory.

In a second possible implementation, the memory may be a cache, and the first address is a storage address of target data in the cache.

In addition, the queue group may include a plurality of queues, each of the plurality of queues may be used to store data, and each of the plurality of queues may be a first-in first-out (first-input first-output, FIFO) queue. The first queue is a queue corresponding to the first address in the plurality of queues.

For example, it is assumed that a length of the first queue is 10, and identification information of the first queue may be represented as 0 to 9. It is assumed that identification information of a queue head is 0, identification information of a queue tail is 9, and one data pointer is read each time. When data is to be written to the first queue, the data is stored in a storage area indicated by a data pointer, and the data pointer is written to the queue tail 9. When data in the first queue is to be read, a data pointer stored in the queue head 0 is read, and data in a storage area indicated by the data pointer is read. When data is read next time, a location indicated by the identification information 1 is the queue head, and a location indicated by the identification information 0 is the queue tail, so that first-in first-out is implemented. When only one area in a queue has a data pointer, for example, only a location indicated by the identification information 9 has a data pointer, the location indicated by the identification information 9 is the queue head of the first queue and is also the queue tail of the first queue.

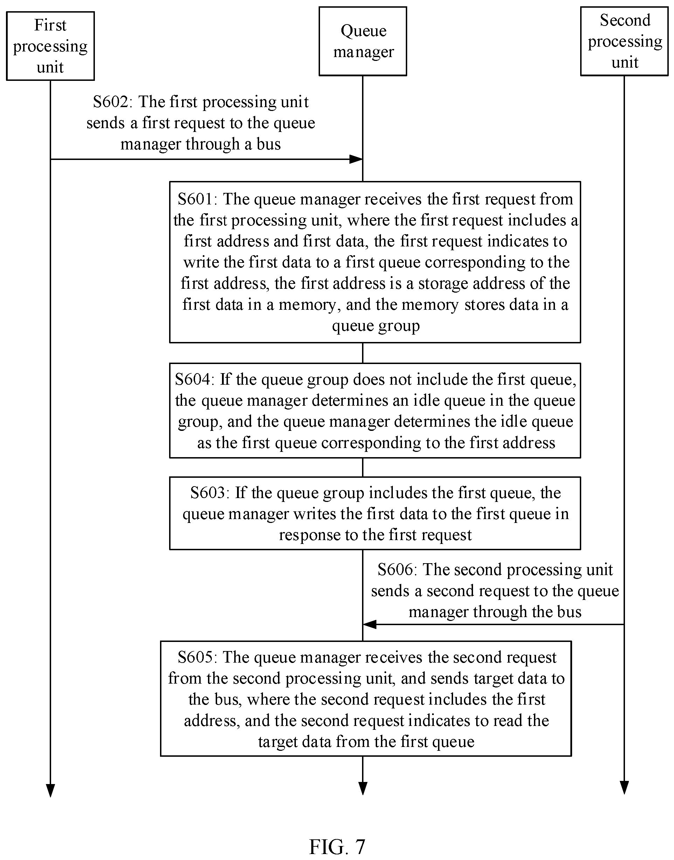

For example, as shown in FIG. 7, before step S601, the method provided in this embodiment of this application further includes step S602: The first processing unit sends the first request to the queue manager through a bus.

During actual application, identification information of each queue in the queue group may be queried, to determine whether the queue group includes the first queue. If the identification information includes the first address, or identification information corresponding to the first address exists, the first queue exists in the queue group. If the identification information does not include the first address, and the identification information corresponding to the first address does not exist, it is determined that the queue group does not include the first queue.

Optionally, the queue group may include the first queue, or may not include the first queue. The following separately describes the two cases.

In a first possible embodiment, the queue group includes the first queue, and the method includes step S603.

S603: If the queue group includes the first queue, the queue manager writes the first data to the first queue in response to the first request.

Specifically, the identification information of each of the plurality of queues is queried. If identification information of a queue includes the first address, or identification information of a queue is in correspondence with the first address, the queue is the first queue corresponding to the first address, and the target data is written to the first queue.

In a possible implementation, writing the first data to the first queue may be specifically: The queue manager writes the first data to a storage area indicated by a first data pointer, where the first data pointer is a data pointer corresponding to the storage area that stores the first data in the first queue; and the queue manager writes the first data pointer to the first queue. Specifically, the queue manager writes the first data pointer to a queue tail of the first queue.

In a second possible embodiment, the queue group does not include the first queue. For example, as shown in FIG. 7, the method further includes step S604.

S604: If the queue group does not include the first queue, the queue manager determines an idle queue in the queue group, and the queue manager determines the idle queue as the first queue corresponding to the first address.

The idle queue indicates that the queue is not occupied by another address in the memory. That is, the queue has no corresponding address, or identification information of the queue includes no address.

Specifically, the queue manager queries the identification information of each queue in the queue group, and determines, in the queue group, an idle queue whose identification information does not include an address in the memory or is not in correspondence with an address in the memory.

Further, that the queue manager determines the idle queue as the first queue corresponding to the first address includes: The queue manager uses the first address as index information of the idle queue, to determine the idle queue as the first queue corresponding to the first address.

Optionally, the first address may be used as the index information of the idle queue in two different manners. The following separately describes the two manners in detail.

In a first manner, the first address is directly used as identification information of the idle queue. In this manner, the first address is directly used as the identification information of the idle queue, and the first queue may be directly determined from the queue group based on the first address, to improve a speed of determining the first queue.

In a second manner, a correspondence between the first address and the identification information of the idle queue is established, and the idle queue is determined as the first queue. In this manner, the correspondence between the identification information of the idle queue and the first address is established. The corresponding identification information may be determined by using the first address, and the first queue may be uniquely determined based on the identification information, to ensure uniqueness of the first queue.

In a possible embodiment, if there is no idle queue in the queue group, that is, each queue in the queue group includes a corresponding address, and the address is different from the first address included in the first request, the queue manager may create an idle queue in the queue group, or wait in place for first preset duration until an idle queue appears in the queue group. The following separately describes processes of determining an idle queue in the two possible cases.

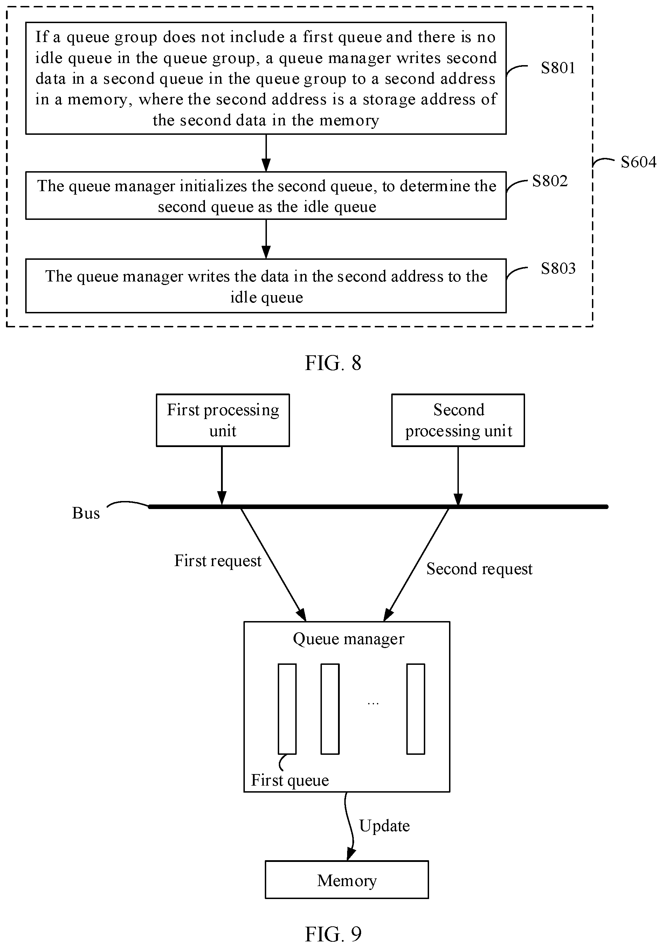

In a first case, if the queue group does not include the first queue, and there is no idle queue in the queue group, for example, as shown in FIG. 8, the method provided in this embodiment of this application further includes the following steps.

S801: If the queue group does not include the first queue, and there is no idle queue in the queue group, the queue manager writes second data in a second queue in the queue group to a second address in the memory, where the second address is a storage address of the second data in the memory.

Optionally, the second queue may be any queue in the queue group. Alternatively, the second queue may be a queue with lowest usage in the queue group. This is not specifically limited in this embodiment of this application.

S802: The queue manager initializes the second queue, to determine the second queue as the idle queue.

S803: The queue manager writes the data in the second address to the idle queue.

Initializing the second queue is resetting identification information of the second queue. Because the identification information of the second queue may include the foregoing two possible manners, the following separately describes cases of initializing the second queue in the two manners.

In a first manner, the identification information of the second queue is the first address. Initializing the second queue includes deleting the identification information of the second queue.

In a second manner, there is a correspondence between the identification information of the second queue and the first address. Initializing the second queue includes removing the correspondence between the identification information of the second queue and the first address, so that the identification information of the second queue does not have a corresponding address.

In the first case, the data in the second queue is written to the memory, to determine an idle queue in the queue group, so that a capacity of the queue group is equal to a capacity of the memory, to increase utilization of the queue group.

In a second case, if the queue group does not include the first queue, and there is no idle queue in the queue group, the queue manager waits in place for the first preset duration until an idle queue appears in the queue group.

Further, the method provided in this embodiment of this application further includes: if the queue group does not include the first queue, and there is no idle queue in the queue group, waiting in place for the first preset duration until an idle queue appears in the queue group. In the second case, an idle queue is obtained by waiting, and this increases selectivity.

Further, the method further includes step S605:

S605: The queue manager receives a second request from a second processing unit, and sends target data to the bus, where the second request includes the first address, and the second request indicates to read the target data from the first queue.

The second processing unit may be a thread, a core, a CPU, or any processor that participates in computing or communication. The processor may be the processor described in FIG. 5. The processor may also be referred to as a computing unit. In a first possible implementation, both the first processing unit and the second processing unit are threads. In a second possible implementation, both the first processing unit and the second processing unit are cores. In a third possible implementation, both the first processing unit and the second processing unit are processors. In addition, the second request may also be referred to as a read request. The second request may be implemented by using an instruction. For example, the instruction may include a gqm_pop instruction.

Optionally, before step S605, the method provided in this embodiment of this application further includes S606: The second processing unit sends the second request to the queue manager through the bus.

Further, if the second request is sent before the first request, that is, there is no target data in the first queue, the method further includes: The queue manager waits for second preset duration until the target data exists in the first queue. That is, the queue manager waits for the second preset duration until the target data is written to the first queue.

In actual application, a plurality of second processing units may read same target data. If a second processing unit reads target data in the first queue, the first queue does not include the target data. As a result, another second queue cannot read the target data from the first queue. Therefore, in this scenario, a spin lock (spinlock) is usually used to read the target data, so that when a second processing unit reads the target data, another second processing unit cannot read the target data from the first queue. That is, only one second processing unit accesses the first queue at a same moment. After reading the target data, the second processing unit may rewrite the target data to the first queue, to ensure that another second unit can read the target data from the first queue.

Further, the second instruction includes the spin lock (spinlock). The information synchronization method provided in this embodiment of this application further includes: The queue manager reads the target data based on the second request; and the queue manager receives and executes a third request from the second processing unit. The third request includes the target data and the first address, and the third request indicates to write the target data to the first queue.

Optionally, the request in this embodiment of this application may include GQM semantics, and the GQM semantics is semantics independent of memory semantics. For example, a specific function of the spin lock (spinlock) may be implemented by code. For example, the code may be:

```
          gqm_lock_t *gqm_lock_create() {
          gqm = malloc(...);
          gqm_init(qm, 1);
          gqm_push_block(qm);//push a message
          return qm;}
          gqm_lock(qm_lock_t *qm) {gqm_pop_block(qm);}
          gqm_unlock(qm_lock_t *t) {gqm_push_nonblock(qm)
;//send a message to activate another waiting party}.
```

Optionally, before the third request is received, the information synchronization method provided in this embodiment of this application further includes: The second processing unit sends the third request to the queue manager.

Optionally, a read-preferred lock is implemented in a scenario with frequent reads and infrequent writes. The read-preferred lock is to delete an old data pointer that is no longer used in a queue and data in a storage area indicated by the old data pointer. It is assumed that a data pointer corresponding to the first data is the first data pointer, and the first data is not changed in a process of reading the first data pointer in the first queue. Therefore, a location of the first data pointer in the first queue remains unchanged in the reading process. When the first data needs to be updated, the queue manager writes a data pointer corresponding to the updated first data at the queue tail, so that a location of the first data pointer in the first queue changes. That is, the first data pointer is no longer located at the queue tail. In this case, the first data and the first data pointer are old data and an old pointer in the first queue. When no processing unit accesses the first data pointer, the first data and the first data pointer may be deleted.

Further, the information synchronization method provided in this embodiment of this application further includes: The queue manager deletes the first data pointer and the first data based on the location of the first data pointer in the first queue and identification information of the first data pointer.

In a possible embodiment, the queue manager does not include a queue, the electronic device includes a queue manager, a bus, a plurality of processing units, and a memory, the queue manager communicates with the processing units through the bus, and the plurality of processing units include a first processing unit and a second processing unit. The method includes: The queue manager receives a first request from the first processing unit, where the first request includes a first address and first data, the first request indicates to write target data to the first address, the first address is a storage address of the first data in the memory, and the memory is stores data. In response to the first request, the queue manager writes the first data to the first address according to a queuing sequence, where the queuing sequence is determined by the queue manager based on a data state in the first address and a capacity of the first address. The memory receives a second request from the second processing unit, and sends the target data to the bus, where the second request includes the first address, and the second request indicates to read the target data from the first address. In this embodiment, the first data may be directly stored in the memory to implement information synchronization, to improve information synchronization efficiency.

For ease of understanding, the information synchronization method provided in embodiments of this application is described with reference to FIG. 9. The information synchronization method shown in FIG. 9 is applied to an electronic device, and the electronic device includes a plurality of processing units, a queue manager, a memory, and a bus. The plurality of processing units communicate with the queue manager through the bus, and the queue manager may include a plurality of queues. The plurality of processing units include a first processing unit and a second processing unit.

The first processing unit may be configured to: send a first request to the queue manager through the bus, where the first request includes a first address and first data, the first request indicates to write target data to a first queue corresponding to the first address, and the first address is a storage address of the first data in a memory. The queue manager receives the first request, determines the first queue from the plurality of queues, and writes the first data to the first queue. The queue manager is further configured to receive a second request sent by the second processing unit, where the second request includes the first address, and the second request indicates to read the target data from the first queue.

According to the information synchronization method provided in this embodiment of this application, the second processing unit can read the target data from the first queue by using the second request and perform a subsequent step by using the target data only after the first processing unit writes the first data to the first queue by using the first request, so that information synchronization between different objects is implemented by using the queue. In addition, the first queue sends the target data to the bus only after receiving the second request for reading the target data. In this process, no large amount of invalid data is generated on the bus. Compared with memory sharing in which as long as there is new data, the new data is shared to another computing unit by using a bus and a synchronization protocol, this process improves synchronization efficiency.

It may be understood that, to implement the foregoing functions, the information synchronization apparatus includes a hardware structure and/or a software module for performing a corresponding function. A person skilled in the art should easily be aware that, in combination with steps of the information synchronization method in the examples described in embodiments in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the information synchronization apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. Optionally, module division in embodiments of this application is an example, and is merely logical function division. During actual implementation, there may be another division manner.

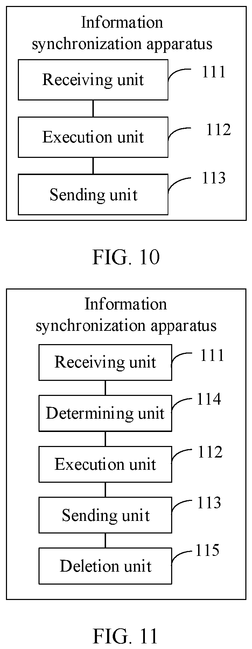

When each functional module is obtained through division based on each corresponding function, FIG. 10 is a possible diagram of a structure of an information synchronization apparatus in the foregoing embodiment. The information synchronization apparatus includes a receiving unit 111, an execution unit 112, and a sending unit 113. The receiving unit 111 is configured to support the information synchronization apparatus in performing related steps in S601 and S605 in the foregoing method embodiment. The execution unit 112 is configured to support the information synchronization apparatus in performing S603 in the foregoing method embodiment. The sending unit 113 is configured to support the information synchronization apparatus in performing related steps in S605 in the foregoing method embodiment.

Optionally, as shown in FIG. 11, the information synchronization apparatus further includes a determining unit 114 and a deletion unit 115. The determining unit 114 is configured to support the information synchronization apparatus in performing steps S801 to S803 in the foregoing method embodiments. The deletion unit 115 is configured to delete a first data pointer and first data based on a location of the first data pointer in a first queue and identification information of the first data pointer.

In hardware implementation, the information synchronization apparatus may be the queue manager shown in FIG. 5. For a specific description of the queue manager, refer to the specific description in FIG. 3. Details are not described again in this embodiment of this application.

Optionally, all related content of the steps in the foregoing method embodiments may be cited in function descriptions of corresponding functional modules. Details are not described herein again. The apparatus provided in this embodiment of this application is configured to perform a corresponding function in the foregoing embodiment, and therefore can achieve same effect as the foregoing control method.

In the several embodiments provided in this application, it should be understood that the disclosed apparatus and method may be implemented in other manners. For example, the described apparatus embodiment is merely an example. For example, the division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several requests for enabling an apparatus to perform all or some of the steps of the methods described in embodiments of this application. The foregoing storage medium includes any medium that can store program code, such as a USB flash drive, a removable hard disk, a ROM, a RAM, a magnetic disk, or an optical disc.

According to another aspect of this application, a queue manager is provided. The queue manager includes a processor and a memory. The memory is configured to store a request. The processor is configured to perform related steps in the foregoing method embodiments. The queue manager may be the queue manager provided in FIG. 5.

According to another aspect of this application, an information synchronization apparatus is provided. The information synchronization apparatus includes a processor and a memory. The memory is configured to store a request. The processor is configured to perform related steps in the foregoing method embodiments. The processor may be the processor provided in FIG. 5.

According to still another aspect of this application, a computer-readable storage medium is provided. The computer-readable storage medium includes a computer request. When the computer request is run on an information synchronization apparatus, the information synchronization apparatus is enabled to perform related steps in the foregoing method embodiments.

According to still another aspect of this application, a computer program product including a request is provided. When the computer program product runs on a computer device, the computer device is enabled to perform related steps in the foregoing method embodiments.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An information synchronization method, applied to an electronic device, wherein the electronic device comprises a queue manager, a bus, a plurality of processing units, and a memory, the queue manager communicates with the processing units through the bus, the queue manager comprises a queue group, the queue group comprises a plurality of queues, the plurality of processing units comprise a first processing unit and a second processing unit, and the method comprises:
receiving, by the queue manager, a first request from the first processing unit, wherein the first request comprises a first address and first data, the first request indicates to write the first data to a first queue corresponding to the first address, the first address is a storage address of the first data in the memory, and the memory stores data in the queue group;
if the queue group comprises the first queue, writing, by the queue manager, the first data to the first queue in response to the first request; and
receiving, by the queue manager, a second request from the second processing unit, and sending target data to the bus, wherein the second request comprises the first address, and the second request indicates to read the target data from the first queue.

2. The method according to claim 1, wherein the method further comprises:
if the queue group does not comprise the first queue, determining, by the queue manager, an idle queue in the queue group; and
determining, by the queue manager, the idle queue as the first queue corresponding to the first address.

3. The method according to claim 2, wherein determining, by the queue manager, the idle queue as the first queue corresponding to the first address comprises:
using, by the queue manager, the first address as index information of the idle queue, to determine the idle queue as the first queue.

4. The method according to claim 2 or 3, wherein determining, by the queue manager, the idle queue in the queue group comprises:
if the queue group does not comprise the first queue and there is no idle queue in the queue group, writing, by the queue manager, second data in a second queue in the queue group to a second address in the memory, wherein the second address is a storage address of the second data in the memory;
initializing, by the queue manager, the second queue, to determine the second queue as the idle queue; and
writing, by the queue manager, the data in the second address to the idle queue.

5. The method according to any one of claims 1 to 4, wherein writing the first data to the first queue comprises:
writing, by the queue manager, the first data to a storage area indicated by a first data pointer, wherein the first data pointer is a data pointer corresponding to the storage area that stores the first data in the first queue; and
writing, by the queue manager, the first data pointer to the first queue.

6. The method according to any one of claims 1 to 5, wherein the method further comprises:
deleting, by the queue manager, the first data pointer and the first data based on a location of the first data pointer in the first queue and identification information of the first data pointer.

7. The method according to any one of claims 1 to 6, wherein the memory comprises a main memory or a cache.

8. An information synchronization method, applied to an electronic device, wherein the electronic device comprises a queue manager, a bus, a plurality of processing units, and a memory, the queue manager communicates with the processing units through the bus, the plurality of processing units comprise a first processing unit and a second processing unit, and the method comprises:
receiving, by the queue manager, a first request from the first processing unit, wherein the first request comprises a first address and first data, the first request indicates to write the first data to the first address, the first address is a storage address of the first data in the memory, and the memory stores data;
in response to the first request, writing, by the queue manager, the first data to the first address according to a queuing sequence, wherein the queuing sequence is determined by the queue manager based on a data state in the first address and a capacity of the first address; and
receiving, by the queue manager, a second request from the second processing unit, and sending target data to the bus, wherein the second request comprises the first address, and the second request indicates to read the target data from the first address.

9. An information synchronization apparatus, used in an electronic device, wherein the electronic device further comprises a bus, a plurality of processing units, and a memory, the apparatus communicates with the processing units through the bus, the apparatus comprises a queue group, the queue group comprises a plurality of queues, the plurality of processing units comprise a first processing unit and a second processing unit, and the apparatus further comprises:
a receiving unit, configured to receive a first request from the first processing unit, wherein the first request comprises a first address and first data, the first request indicates to write the first data to a first queue corresponding to the first address, the first address is a storage address of the first data in the memory, and the memory stores data in the queue group;
an execution unit, configured to: when the queue group comprises the first queue, write the first data to the first queue in response to the first request, wherein
the receiving unit is further configured to receive a second request from the second processing unit, wherein the second request comprises the first address, and the second request indicates to read target data from the first queue; and
a sending unit, configured to send the target data to the bus.

10. The apparatus according to claim 9, wherein the apparatus further comprises a determining unit, and the determining unit is configured to:
when the queue group does not comprise the first queue, determine an idle queue in the queue group; and
determine the idle queue as the first queue corresponding to the first address.

11. The apparatus according to claim 10, wherein the determining unit is further configured to:
use the first address as index information of the idle queue, to determine the idle queue as the first queue.

12. The apparatus according to claim 10 or 11, wherein the determining unit is further configured to:
when the queue group does not comprise the first queue and there is no idle queue in the queue group, write second data in a second queue in the queue group to a second address in the memory, wherein the second address is a storage address of the second data in the memory;
initialize the second queue, to determine the second queue as the idle queue; and
write the data in the second address to the idle queue.

13. The apparatus according to any one of claims 9 to 12, wherein the execution unit is further configured to:
write the first data to a storage area indicated by a first data pointer, wherein the first data pointer is a data pointer corresponding to the storage area that stores the first data in the first queue; and
write the first data pointer to the first queue.

14. The apparatus according to any one of claims 9 to 13, wherein the apparatus further comprises a deletion unit, and the deletion unit is configured to:
delete the first data pointer and the first data based on a location of the first data pointer in the first queue and identification information of the first data pointer.

15. The apparatus according to any one of claims 9 to 14, wherein the memory comprises a main memory or a cache.

16. An information synchronization apparatus, wherein the information synchronization apparatus comprises a processor and a memory, the memory is configured to store instructions, and the processor is configured to perform the information synchronization method according to any one of claims 1 to 7 or claim 8.

17. A computer-readable storage medium, wherein the computer-readable storage medium comprises computer requests, and when the computer requests are run on an information synchronization apparatus, the information synchronization apparatus is enabled to perform the information synchronization method according to any one of claims 1 to 7 or claim 8.

18. A computer program product comprising requests, wherein when the computer program product runs on a computer device, the computer device is enabled to perform the information synchronization method according to any one of claims 1 to 7 or claim 8.
